# FASCICULE DE BREVET EUROPEEN

(11) **EP 3 960 538 B1**
(45) Date de publication et mention de la délivrance du brevet: **07.08.2024**
(21) Numéro de dépôt: 21187085.2
(22) Date de dépôt: 22.07.2021
(51) Int. Cl.: B60P 3/20, B62D 33/04

(54) **MODULE DE CARROSSERIE POUR VÉHICULE FRIGORIFIQUE COMPRENANT UN PANNEAU D'ISOLATION SOUS VIDE, ET PROCÉDÉ DE FABRICATION ASSOCIÉ**
KAROSSERIEMODUL FÜR EIN KÜHLFAHRZEUG MIT VAKUUM-ISOLIERPANEEL UND ENTSPRECHENDES HERSTELLUNGSVERFAHREN
BODY MODULE FOR REFRIGERATED VEHICLES INCLUDING A VACUUM INSULATION PANEL, AND ASSOCIATED MANUFACTURING METHOD

(30) Priorité: 31.08.2020 FR 2008820
(43) Date de publication de la demande: 02.03.2022
(73) Titulaire: JEAN CHEREAU SAS, 50220 Ducey-les-Chéris (FR)
(72) Inventeur: MONTI, Arthur, 50300 SAINT SENIER SOUS AVRANCHES (FR); HUARD, Jérôme, 50300 SAINT MARTIN DES CHAMPS (FR); DUBOURG, Vincent, 50220 JUILLEY (FR)
(74) Mandataire: Casalonga

(56) Documents cités:
- EP-A1- 2 093 340
- FR-A1- 2 963 291
- FR-A1- 2 991 250
- US-B1- 6 860 082

## Description

La présente invention concerne le domaine des véhicules frigorifiques, et notamment des véhicules frigorifiques utilisés pour le transport de marchandises.

Plus particulièrement, la présente invention concerne un module de carrosserie utilisé pour la fabrication d'une carrosserie frigorifique destinée à être montée par exemple sur le châssis d'un véhicule routier de transport tel qu'un camion, une semi-remorque, une remorque ou un porteur.

Une carrosserie frigorifique permet de transporter des marchandises ou des denrées périssables nécessitant d'être maintenues à une température constante, généralement inférieure à la température extérieure.

Classiquement, les parois d'une carrosserie frigorifique sont formées à partir de panneaux composites multicouches.

Pour améliorer les propriétés d'isolation thermique sans augmentation de l'épaisseur des parois de la carrosserie frigorifique, il est connu d'utiliser des panneaux d'isolation sous vide comportant un matériau isolant poreux formant une âme qui est encapsulée à l'intérieur d'une membrane étanche aux gaz et à l'eau.

La demande de brevet FR-A1-2 963 291 (CHEREAU) décrit par exemple un module de carrosserie comprenant un panneau d'isolation sous vide et une enveloppe de protection surmoulée autour du panneau de manière à l'encapsuler entièrement.

Selon une autre conception, le module de carrosserie peut comprendre une plaque support sur laquelle est fixée le panneau d'isolation sous vide, et une enveloppe de protection surmoulée à la fois sur le panneau et sur la plaque support. Pour plus de détail, on pourra se référer à la demande de brevet FR-A1-2 991 250 (CHEREAU).

Cependant, de telles solutions avec surmoulage d'une enveloppe de protection peuvent être relativement difficiles à réaliser industriellement pour un fabricant de carrosserie frigorifique. En effet, l'utilisation de ce procédé rend délicate la maîtrise de paramètres, tels que l'homogénéité et la densité du polyuréthane surmoulé de l'enveloppe de protection, qui influent sur les propriétés d'isolation thermique du matériau.

En outre, le procédé par surmoulage peut également conduire à des défauts macroscopiques, tels que des pores à la surface de l'enveloppe de protection ou des bulles d'air dans son épaisseur. Ceci nuit aussi à l'obtention de propriétés d'isolation thermique améliorée.

De plus, pour permettre une expansion du polyuréthane dans de bonnes conditions lors du surmoulage, il est nécessaire de prévoir des bandes de matière périphériques présentant une largeur assez importante. Ceci implique une reprise par usinage en largeur et en longueur du module de carrosserie pour optimiser le ratio entre la surface du panneau d'isolation sous vide et la surface du polyuréthane expansé. Cela engendre des chutes de matière importantes, et donc trop de déchets.

Le document US 6 860 082 B1 divulgue un autre module de carrosserie pour véhicule frigorifique selon l'art antérieur.

La présente invention vise à remédier à ces inconvénients et est exposée dans le jeu de revendications joint.

Plus particulièrement, la présente invention vise à prévoir un module de carrosserie pour véhicule frigorifique, notamment pour véhicule routier de transport de marchandises, présentant de bonnes propriétés d'isolation thermique, facile à fabriquer et présentant une conception qui permet de limiter les déchets générés lors de sa fabrication.

L'invention a pour objet un module de carrosserie pour véhicule frigorifique, notamment pour véhicule routier de transport de marchandises, comprenant au moins un élément d'isolation sous vide pourvu d'un noyau et d'une membrane d'encapsulation dudit noyau.

Selon l'invention, le module comprend en outre une âme centrale délimitant au moins un logement qui traverse l'épaisseur de l'âme et à l'intérieur duquel est disposé ledit élément d'isolation sous vide, et une plaque support sur laquelle sont fixés l'âme centrale et ledit élément d'isolation sous vide.

Selon l'invention, le module comprend également un couvercle recouvrant ledit élément d'isolation sous vide et au moins en partie l'âme centrale, le couvercle étant fixé au moins sur l'âme centrale.

Selon l'invention, le couvercle et la plaque support sont disposés de part et d'autre de l'âme centrale et dudit élément d'isolation sous vide.

Avec un tel module de carrosserie, il est possible d'utiliser pour la plaque support et pour le couvercle des plaques qui ont été fabriquées au préalable, par exemple des plaques de polyuréthane rigide déjà expansé et dont la qualité peut être contrôlée avant l'incorporation du ou des éléments d'isolation sous vide.

L'âme délimitant le ou les logements pour le ou les éléments d'isolation sous vide peut également être fabriquée au préalable à partir d'une plaque, ce qui permet de pouvoir recycler facilement les déchets générés lors de la réalisation du ou des logements.

En outre, la taille du ou des logements de l'âme peut être optimisée sans risque de dégrader la qualité de la matière de celle-ci au niveau de ses bords, contrairement aux solutions avec surmoulage.

Par ailleurs, avant l'incorporation du ou des éléments d'isolation sous vide, il est possible de réaliser sur la plaque support ou le couvercle des usinages pour l'intégration de barres ou rails d'arrimage, de feuillures d'inserts métalliques etc., ce qui élimine le risque de détérioration des éléments d'isolation sous vide lors de ces opérations.

Selon l'invention, l'âme centrale laisse libre des faces principales dudit élément d'isolation sous vide qui délimitent son épaisseur, l'âme centrale entourant la périphérie dudit élément d'isolation sous vide.

Dans un mode de réalisation, le couvercle peut être fixé à la fois sur l'âme centrale et sur ledit élément d'isolation sous vide.

Dans un mode de réalisation, le couvercle recouvre entièrement une première face principale de l'âme centrale qui est opposée à une deuxième face principale de l'âme qui est fixée à la plaque support. Avantageusement, le couvercle recouvre entièrement une des faces principales dudit élément d'isolation sous vide laissée libre par l'âme centrale. De préférence, la plaque support, le couvercle et l'âme sont de dimensions et de formes extérieures identiques.

Comme indiqué précédemment, l'âme centrale peut être réalisée en une seule pièce. Alternativement, l'âme centrale peut être formée par assemblage d'au moins deux longerons et d'au moins deux traverses reliant transversalement lesdits longerons.

Dans un mode de réalisation particulier, l'élément d'isolation sous vide peut être centré sur le plan longitudinal médian du module. Ainsi, on limite les sollicitations en flexion de l'élément d'isolation sous vide, notamment lors de la fabrication du panneau de carrosserie intégrant le module, ce qui permet de limiter une éventuelle détérioration.

Avantageusement, la plaque support et le couvercle sont réalisés chacun dans un matériau isolant thermiquement. La plaque support peut être réalisée en polyuréthane, notamment en polyuréthane expansé. Le couvercle peut également être réalisé en polyuréthane, notamment en polyuréthane expansé. Alternativement, il est possible de réaliser la plaque support et/ou le couvercle dans d'autres matériaux, par exemple en polymère thermodurcissable, en polymère thermoplastique, en contreplaqué, en bois, etc.

Avantageusement, l'âme est réalisée dans un matériau isolant thermiquement. L'âme peut être réalisée en mousse thermodurcissable, par exemple en mousse de polyuréthane, notamment en mousse de polyuréthane expansé. Alternativement, l'âme peut être réalisée en mousse thermoplastique, notamment en mousse PET.

Dans un mode de réalisation, l'élément d'isolation sous vide est pourvu d'une âme et d'une membrane d'encapsulation de ladite âme. L'élément d'isolation sous vide peut se présenter sous la forme d'un panneau. L'âme de l'élément d'isolation sous vide peut se présenter sous la forme d'une plaque réalisée dans un matériau isolant thermiquement, pouvant par exemple être à pores ouverts. Avantageusement, la membrane d'encapsulation est étanche aux gaz, notamment à l'oxygène. Avantageusement, la membrane d'encapsulation est également étanche à l'eau.

Dans un mode de réalisation, l'âme centrale délimite une pluralité de logements à l'intérieur de chacun desquels est disposé au moins un élément d'isolation sous vide. Alternativement, l'âme centrale peut délimiter un unique logement.

L'invention concerne également un panneau de carrosserie pour véhicule frigorifique, notamment pour véhicule routier de transport de marchandises, comprenant une pluralité de modules de carrosserie tels que définis précédemment et alignés longitudinalement les uns relativement aux autres.

L'invention concerne encore une carrosserie frigorifique pour véhicule, notamment pour véhicule routier de transport de marchandises, comprenant un espace intérieur de chargement délimité par des parois formant des flancs verticaux, un plancher et un plafond, dans laquelle au moins une desdites parois comprend un panneau de carrosserie tel que défini précédemment.

L'invention concerne aussi un procédé de fabrication d'un module de carrosserie tel que défini précédemment, comprenant :
- une première étape d'application de colle sur une des faces principales de la plaque support,
- une étape de positionnement de l'âme centrale et dudit élément d'isolation sous vide contre la face principale de la plaque support enduite de colle,
- une deuxième étape d'application de colle au moins sur l'âme centrale du côté opposé à la plaque support,
- une étape de positionnement du couvercle contre l'âme centrale enduite de colle et contre ledit élément d'isolation sous vide, et
- une étape de pressage du module au moins pendant la durée de polymérisation de la colle appliquée.

Dans un mode de mise en oeuvre avantageux, l'étape de pressage du couvercle est réalisée sous vide.

Dans un mode de mise en oeuvre, lors de la deuxième étape d'application de colle, de la colle est appliquée à la fois sur l'âme centrale et sur ledit élément d'isolation sous vide.

La présente invention sera mieux comprise à la lecture de la description détaillée de modes de réalisation pris à titre d'exemples nullement limitatifs et illustrés par les dessins annexés sur lesquels :
[Fig 1] est une vue de côté d'une carrosserie frigorifique selon un exemple de réalisation de l'invention,
[Fig 2] est une vue en coupe selon l'axe II-II de la figure 1,
[Fig 3] est une vue en coupe longitudinale d'un module de la carrosserie frigorifique des figures 1 et 2 selon un premier exemple de réalisation de l'invention,
[Fig 4] est une vue de détail de la figure 3,
[Fig 5] est une vue en perspective du module de la figure 3,
[Fig 6] est une vue en perspective éclatée du module des figures 3 et 5, et
[Fig 7] est une vue en perspective éclatée d'un module de carrosserie selon un deuxième exemple de réalisation de l'invention.

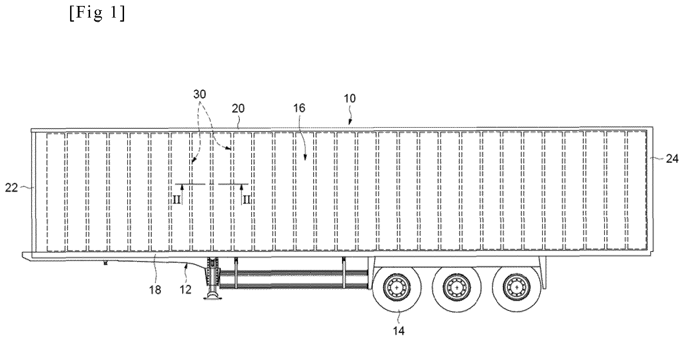

Sur la figure 1, on a représenté une carrosserie frigorifique, référencée 10 dans son ensemble, montée sur un châssis 12 porteur de véhicule de transport routier s'étendant longitudinalement et équipé de roues 14.

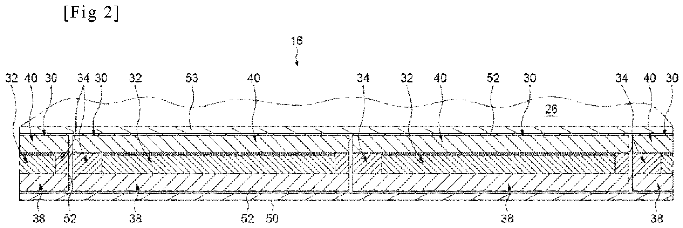

La carrosserie 10 comprend deux flancs 16 verticaux opposés s'étendant longitudinalement (un seul étant visible sur la figure), un plancher 18, un plafond 20, une face avant 22 et une porte arrière 24 assemblés entre eux pour délimiter un espace de chargement 26 intérieur qui est visible en partie à la figure 2.

Comme illustré sur cette figure 2, le flanc 16 comprend une pluralité de modules 30 de carrosserie identiques, alignés longitudinalement et assemblés les uns relativement aux autres comme cela sera décrit plus en détail par la suite. Les modules 30 de carrosserie se présentent sous la forme de panneaux de forme générale parallélépipédique à section rectangulaire.

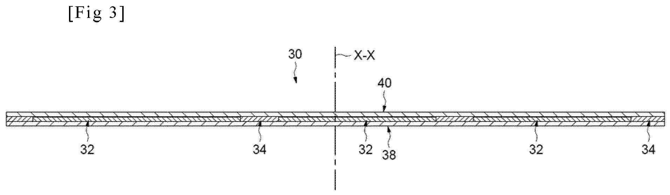

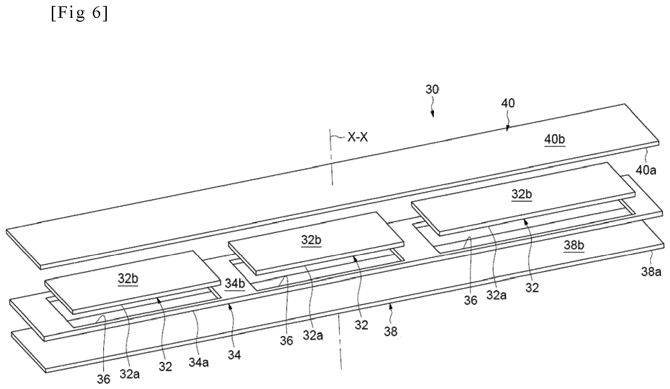

Comme illustré notamment aux figures 3 et 6, chaque module 30 de carrosserie comprend une pluralité de panneaux 32 d'isolation sous vide, une âme 34 centrale délimitant des logements 36 pour ces panneaux, ainsi qu'une plaque 38 support et un couvercle 40 disposés latéralement de part et d'autre des panneaux 32 d'isolation sous vide et de l'âme 34 centrale. Dans cet exemple de réalisation, les panneaux 32 d'isolation sous vide sont au nombre de trois. Comme cela sera précisé par la suite, il est possible de prévoir un nombre différent de panneaux 32 d'isolation sous vide.

La plaque 38 support, les panneaux 32 d'isolation sous vide, l'âme 34 et le couvercle 40 sont empilés selon une direction verticale illustrée par l'axe X-X'. Chaque module 30 est formé par cet assemblage sandwich.

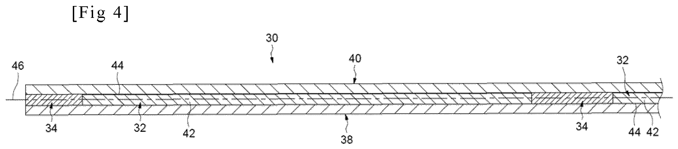

En se référant à la figure 4, chaque panneau 32 d'isolation sous vide comprend une âme ou noyau 42 et une membrane 44 d'encapsulation enveloppant le noyau. La membrane 44 est étanche aux gaz, notamment à l'oxygène. La membrane 44 est également étanche à l'eau. Dans le mode de réalisation illustré, chaque panneau 32 d'isolation sous vide se présente sous la forme d'une plaque souple parallélépipédique à section rectangulaire. Chaque panneau 32 d'isolation sous vide comprend deux faces 32a, 32b principales opposées (figure 6) délimitant son épaisseur. Chaque panneau 32 d'isolation sous vide comprend également deux chants opposés longitudinaux et deux chants opposés transversaux (non référencés) délimitant les faces 32a, 32b.

Le noyau 42 de chaque panneau 32 d'isolation sous vide est réalisé dans un matériau isolant thermiquement et comprend avantageusement une structure à pores ouverts. Le noyau 42 peut par exemple être constitué de mousse de polystyrène, de polyuréthane, d'aérogel, de silice, etc. Le noyau 42 est encapsulé dans la membrane 44 associée à pression nulle ou à faible pression.

La membrane 44 d'encapsulation de chaque panneau d'isolation sous vide recouvrant le noyau 42 associé peut par exemple être réalisée en polyester, en polyéthylène, en aluminium ou tout autre matériau approprié permettant de former une barrière étanche aux gaz. Chaque panneau 32 d'isolation est mis sous vide par évacuation de l'air emprisonné dans le noyau 42 de manière à réduire la conductivité thermique du panneau. Pour plus de détails sur les matériaux pouvant être utilisés et sur les procédés de fabrication des panneaux d'isolation sous vide, on pourra à titre d'exemple se référer aux brevets US-B2-6,863,949 et EP-B1-1 265 746.

Pour accroître la performance et la longévité de chaque panneau 32 d'isolation sous vide, un dessiccateur (non représenté) peut être ajouté à l'intérieur du noyau 42 pour absorber la vapeur d'eau et les gaz atmosphériques résiduels et/ou s'infiltrant à l'intérieur de la membrane 44.

La plaque 38 support présente ici une forme générale parallélépipédique à section rectangulaire. La plaque 38 support est avantageusement réalisée en polyuréthane, notamment en polyuréthane expansé. La plaque 38 support peut être obtenue par usinage ou par moulage.

En se référant de nouveau à la figure 6, la plaque 38 support comprend deux faces 38a, 38b principales opposées délimitant son épaisseur. La plaque 38 support comprend également deux chants opposés longitudinaux et deux chants opposés transversaux (non référencés) délimitant les faces 38a, 38b.

L'âme 34 centrale présente ici une forme générale parallélépipédique à section rectangulaire. L'âme 34 est avantageusement réalisée en mousse thermodurcissable, notamment en mousse polyuréthane, ou encore en mousse thermoplastique, notamment en mousse PET. L'âme 34 centrale peut être obtenue par usinage ou par moulage, et par découpe pour réaliser les logements 36.

L'âme 34 comprend deux faces 34a, 34b principales opposées délimitant son épaisseur. L'âme 34 support comprend également deux chants opposés longitudinaux et deux chants opposés transversaux (non référencés) délimitant les faces 34a, 34b.

L'âme 34 est en concordance de forme et de taille avec la plaque 38 support. Chaque logement 36 de l'âme traverse l'épaisseur de l'âme 34. Chaque logement 36 est traversant. Chaque logement 36 débouche sur les faces 34a, 34b principales de l'âme. Dans cet exemple de réalisation, chaque logement 36 reçoit un panneau 32 d'isolation sous vide. Le logement 36 est en concordance de forme avec le panneau 32 d'isolation sous vide associé. Un léger jeu de montage peut subsister entre chaque logement 36 et le panneau 32 d'isolation sous vide associé. Chaque logement 36 est formé de sorte à laisser subsister sur le pourtour une épaisseur de matière de l'âme 34. La périphérie de chaque panneau 32 d'isolation sous vide est entourée par l'âme 34. Les logements 36 sont espacés les uns par rapport aux autres dans le sens longitudinal. L'épaisseur de chaque panneau 32 d'isolation sous vide est égale à celle de l'âme 34.

Le couvercle 40 présente ici une forme générale parallélépipédique à section rectangulaire. Le couvercle 40 support est avantageusement réalisé en polyuréthane, notamment en polyuréthane expansé. Le couvercle 40 peut être obtenu par usinage ou par moulage.

Le couvercle 40 support comprend deux faces 40a, 40b principales opposées délimitant son épaisseur. Le couvercle 40 support comprend également deux chants opposés longitudinaux et deux chants opposés transversaux (non référencés) délimitant les faces 40a, 40b. Le couvercle 40 est en concordance de forme et de taille avec la plaque 38 support et l'âme 34.

Dans la position assemblée du module 30, l'âme 34 centrale laisse libre des faces 32a, 32b principales de chaque panneau d'isolation sous vide. L'âme 34 recouvre les chants transversaux et longitudinaux de chaque panneau d'isolation sous vide.

Dans cette position assemblée du module 30, la face 32a principale de chaque panneau d'isolation sous vide et la face 34a principale de l'âme sont en appui contre la face 38b principale de la plaque support. Chaque panneau 32 d'isolation sous vide et l'âme 34 sont fixés sur la plaque 38 support, par exemple par collage. Chaque panneau 32 d'isolation sous vide et l'âme 34 sont ainsi en appui indirect contre la plaque 38 support avec interposition de colle entre eux. Alternativement, les panneaux 32 d'isolation sous vide et l'âme 34 peuvent être fixés sur la plaque 38 support par tout autre moyen approprié, par exemple par adhésivage.

Dans la position assemblée du module 30, seule la face 32b principale de chaque panneau d'isolation sous vide est laissée libre par la plaque 38 support et par l'âme 34. La plaque 38 support recouvre la face 32a principale de chaque panneau d'isolation sous vide, et l'âme 34 recouvre les chants transversaux et longitudinaux de chaque panneau.

Dans cette position assemblée, la face 32b principale de chaque panneau d'isolation sous vide laissée libre par l'âme et la face 34b principale de l'âme sont recouvertes par le couvercle 40. La face 40a principale du couvercle est en appui contre la face 32b principale de chaque panneau d'isolation sous vide et contre la face 34b principale de l'âme. Le couvercle 40 est fixé sur chaque panneau 32 d'isolation sous vide et sur l'âme 34, par exemple par collage. Le couvercle 40 est en appui indirect contre chaque panneau 32 d'isolation sous vide et contre l'âme 34 avec interposition de colle entre eux. Alternativement, le couvercle 40 peut être fixé sur les panneaux 32 d'isolation sous vide et sur l'âme 34 par tout autre moyen approprié, par exemple par adhésivage.

En considérant l'axe X-X', chaque panneau 32 d'isolation sous vide est entièrement disposé dans le sens vertical entre la plaque 38 support et le couvercle 40. La périphérie de chaque panneau 32 d'isolation sous vide est entourée par l'âme 34. Autrement dit, chaque panneau 32 d'isolation sous vide est inaccessible depuis l'extérieur du module 30. En considérant l'axe X-X', l'âme 34 est aussi entièrement disposée dans le sens vertical entre la plaque 38 support et le couvercle 40.

Par ailleurs, dans l'exemple de réalisation illustré, chaque panneau 32 d'isolation sous vide est centré sur le plan 46 longitudinal médian du module 30 (figure 4). Par plan longitudinal médian du module 30, on entend le plan longitudinal qui se trouve au milieu de l'épaisseur totale du module.

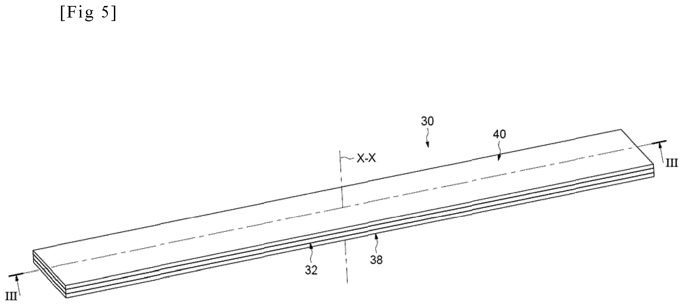

Dans la position assemblée du module 30, les chants transversaux et longitudinaux du couvercle 40, de l'âme 34 et de la plaque 38 support affleurent entre eux comme cela est visible à la figure 5.

Pour la fabrication du module 30 on peut procéder de la manière suivante.

Dans une première étape, la plaque 38 support est positionnée de façon horizontale dans un moule ou un conformateur.

Puis, dans une deuxième étape, on applique de la colle sur la face 38b principale de la plaque support.

Ensuite, dans une troisième étape, on positionne l'âme 34 puis les panneaux d'isolation sous vide contre la face 38b principale de la plaque support enduite de colle.

Dans une quatrième étape, on applique de la colle sur la face 32b principale de chaque panneau d'isolation sous vide et sur la face 34b principale de l'âme qui sont laissées libres par la plaque 38 support.

Ensuite, dans une cinquième étape, on positionne le couvercle 40 contre les faces 32b principales des panneaux 32 d'isolation sous vide et contre la face 34b de l'âme enduites de colle.

Puis, dans une sixième étape, on presse le module 30 de sorte à comprimer l'empilement ainsi formé. Cette étape de pressage est réalisée au moins pendant la durée de polymérisation de la colle appliquée aux deuxième et quatrième étapes.

L'étape de pressage peut avantageusement être réalisée sous vide. Ceci permet d'évacuer l'air qui peut être potentiellement présent entre les panneaux 32 d'isolation sous vide, l'âme 34, la plaque 38 support et le couvercle 40. Ceci permet également au couvercle 40 d'épouser parfaitement la forme de la face 32b principale de chaque panneau d'isolation sous vide qui peut être irrégulière du fait des replis de la membrane d'encapsulation. En outre, cette technique de pressage sous vide permet une application homogène de pression sur le couvercle 40 quelles que soient les irrégularités d'épaisseur. Le pressage sous vide peut par exemple être réalisé par le biais d'un contre-moule flexible et déformable. Alternativement, il reste possible de réaliser l'étape de pressage par d'autres procédés, par exemple par compression mécanique.

Enfin, lors d'une septième étape, le module 30 unitaire formé est extrait du moule ou du conformateur, et peut si nécessaire être repris en épaisseur. Cette reprise peut par exemple être réalisée par ponçage ou rabotage s'il est nécessaire d'ajuster la face 40b principale supérieure du couvercle 40 à la face 38a principale inférieure de la plaque support.

Pour fabriquer un panneau de carrosserie formant le flanc 16 par assemblage de modules 30 de carrosserie, on peut procéder de la manière suivante.

On utilise un support horizontal dont la dimension est au moins égale à la dimension du flanc 16 à fabriquer. Dans un premier temps, on enduit le support de cire synthétique afin de favoriser le démoulage ultérieur du flanc. On dépose ensuite sur la cire une couche de finition 50 polymérisable (figure 2), puis une couche de revêtement 52 polymérisable comprenant des fibres de verre sur la couche de finition 50. Les modules 30 de carrosserie sont ensuite appliqués contre cette couche de revêtement 52 de manière à être alignés et disposés au voisinage immédiat les uns des autres en laissant subsister un léger interstice entre deux modules immédiatement successifs.

De nouvelles couches de revêtement 52 polymérisables sont ensuite déposées de manière à enrober entièrement chacun des modules 30 de carrosserie. Une couche de finition 53 polymérisable est ensuite déposée sur les couches de revêtement 52 du côté opposé à la couche de finition 50. L'assemblage ainsi obtenu est ensuite mis sous presse jusqu'au durcissement des couches.

Après démoulage, on obtient le flanc 16 de la carrosserie frigorifique.

Comme indiqué précédemment, dans cet exemple de réalisation, trois panneaux 32 d'isolation sous vide sont utilisés pour la fabrication d'un module 30 de carrosserie. En variante, il est possible de prévoir un nombre différent de panneaux 32 d'isolation sous vide, par exemple deux ou au moins quatre panneaux 32 d'isolation sous vide au sein d'un même module 30. Les panneaux 32 d'isolation sous vide peuvent être de taille identique ou de tailles différentes comme dans l'exemple illustré. L'espacement entre les logements 36 de l'âme peut être régulier ou variable.

Dans une autre variante, il est aussi possible de prévoir un unique panneau 32 d'isolation sous vide par module 30. Dans une autre variante de réalisation, il est possible de disposer plusieurs panneaux 32 d'isolation sous vide dans un même logement 36. Dans ce cas, ces panneaux 32 d'isolation sous vide sont collés entre eux.

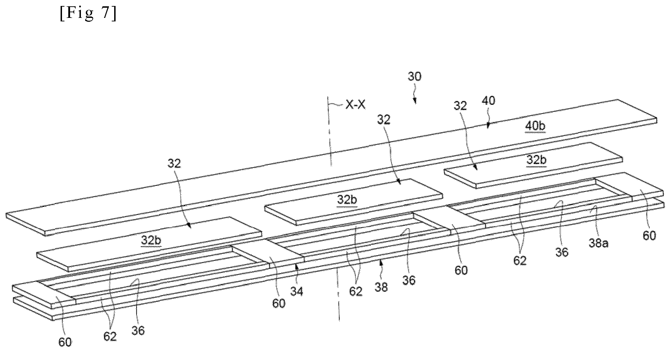

Dans l'exemple de réalisation illustré, l'âme 38 est réalisée en une seule pièce. En variante, comme cela est illustré à la figure 7, sur laquelle les éléments identiques portent les mêmes références, l'âme 38 est formée par assemblage d'une pluralité de paires de traverses 60 espacées les unes par rapport aux autres dans le sens longitudinal, et de paires de longerons 62 s'étendant entre les traverses. Chaque paire de longerons 62 et les deux traverses 60 adj acentes qui relient transversalement ces longerons délimite un logement 36 de l'âme. L'assemblage des longerons 62 et des traverses 60 peut être réalisé par exemple par collage ou par thermo-soudage.

Dans les exemples précédemment décrits, les modules de carrosserie sont utilisés pour la fabrication d'un flanc vertical de la carrosserie. Le plancher et/ou le plafond, et/ou la face avant, et/ou la porte arrière formant les parois de la carrosserie frigorifique peuvent également être fabriqués à partir de tels modules élémentaires de carrosserie.

L'invention a été illustrée à titre d'exemple sur la base d'une carrosserie de véhicule routier de transport du type semi-remorque. L'invention est aussi applicable à une carrosserie de véhicule routier de transport du type porteur, camion, ou remorque.

## Revendications

1. Module (30) de carrosserie pour véhicule frigorifique, notamment pour véhicule routier de transport de marchandises, comprenant au moins un élément d'isolation sous vide (32) pourvu d'un noyau (42) et d'une membrane d'encapsulation (44) dudit noyau, le module comprenant en outre :
- une âme (34) centrale délimitant au moins un logement (36) qui traverse l'épaisseur de l'âme et à l'intérieur duquel est disposé ledit élément d'isolation sous vide (32), l'âme (34) centrale laissant libre des faces (32a, 32b) principales dudit élément d'isolation sous vide (32) qui délimitent son épaisseur,
- une plaque (38) support sur laquelle sont fixés l'âme (34) centrale et ledit élément d'isolation sous vide (32), et
- un couvercle (40) recouvrant ledit élément d'isolation sous vide (32) et au moins en partie l'âme (34) centrale, le couvercle étant fixé au moins sur l'âme centrale,
- le couvercle (40) et la plaque (38) support étant disposés de part et d'autre de l'âme (34) centrale et dudit élément d'isolation sous vide (32), **caractérisé en ce que**
- l'âme (34) centrale entoure la périphérie dudit élément d'isolation sous vide (32).

2. Module selon la revendication 1, dans lequel le couvercle (40) recouvre entièrement une première face principale (34b) de l'âme centrale qui est opposée à une deuxième face principale (34a) de l'âme qui est fixée à la plaque (38) support.

3. Module selon la revendication 2, dans lequel le couvercle (40) recouvre entièrement une des faces (32a, 32b) principales dudit élément d'isolation sous vide (32) laissée libre par l'âme (34) centrale.

4. Module selon l'une quelconque des revendications précédentes, dans lequel la plaque (38) support, le couvercle (40) et l'âme (34) sont de dimensions et de formes extérieures identiques.

5. Module selon l'une quelconque des revendications précédentes, dans lequel l'âme (34) centrale est réalisée en mousse thermodurcissable ou en mousse thermoplastique.

6. Module selon l'une quelconque des revendications précédentes, dans lequel l'âme (34) centrale est réalisée en une seule pièce.

7. Module selon l'une quelconque des revendications 1 à 5, dans lequel l'âme (34) centrale est formée par assemblage d'au moins deux longerons (62) et d'au moins deux traverses (60) reliant transversalement lesdits longerons.

8. Module selon l'une quelconque des revendications précédentes, dans lequel ledit élément d'isolation sous vide (32) est centré sur le plan (46) longitudinal médian dudit module.

9. Module selon l'une quelconque des revendications précédentes, dans lequel la plaque (38) support et le couvercle (40) sont réalisés chacun dans un matériau isolant thermiquement.

10. Module selon l'une quelconque des revendications précédentes, dans lequel l'âme (34) centrale délimite une pluralité de logements (36) à l'intérieur de chacun desquels est disposé au moins un élément d'isolation sous vide (32).

11. Panneau de carrosserie pour véhicule frigorifique, notamment pour véhicule routier de transport de marchandises, comprenant une pluralité de modules (30) de carrosserie selon l'une quelconque des revendications précédentes alignés longitudinalement les uns relativement aux autres.

12. Carrosserie frigorifique pour véhicule, notamment pour véhicule routier de transport de marchandises, comprenant un espace intérieur de chargement délimité par des parois formant des flancs verticaux, un plancher et un plafond, dans laquelle au moins une desdites parois comprend un panneau de carrosserie selon la revendication 11.

13. Procédé de fabrication d'un module de carrosserie selon l'une quelconque des revendications 1 à 10, comprenant :
- une première étape d'application de colle sur une des faces principales de la plaque (38) support,
- une étape de positionnement de l'âme (34) centrale et dudit élément d'isolation sous vide (32) contre la face principale de la plaque (38) support enduite de colle,
- une deuxième étape d'application de colle au moins sur l'âme (34) centrale du côté opposé à la plaque (38) support,
- une étape de positionnement du couvercle (40) contre l'âme (34) centrale enduite de colle et contre ledit élément d'isolation sous vide (32), et
- une étape de pressage du module au moins pendant la durée de polymérisation de la colle appliquée.

14. Procédé selon la revendication 13, dans lequel l'étape de pressage est réalisée sous vide.

## Patentansprüche

1. Karosseriemodul (30) für ein Kühlfahrzeug, insbesondere für ein Straßenfahrzeug für den Gütertransport, umfassend mindestens ein Vakuumisolationselement (32), das mit einem Kern (42) und einer Verkapselungsmembran (44) für den Kern versehen ist, wobei das Modul ferner Folgendes umfasst:
- einen zentralen Kern (34), der mindestens ein Gehäuse (36) begrenzt, das durch die Dicke des Kerns verläuft und in dessen Inneren das Vakuumisolationselement (32) angeordnet ist, wobei der zentrale Kern (34) die Hauptflächen (32a, 32b) des Vakuumisolationselements (32) frei lässt, die seine Dicke begrenzen,
- eine Trägerplatte (38), auf der der zentrale Kern (34) und das Vakuumisolationselement (32) befestigt sind, und
- eine Abdeckung (40), die das Vakuumisolationselement (32) und mindestens teilweise den zentralen Kern (34) abdeckt, wobei die Abdeckung mindestens am zentralen Kern befestigt ist,
- wobei die Abdeckung (40) und die Trägerplatte (38) auf beiden Seiten des zentralen Kerns (34) und des Vakuumisolationselements (32) angeordnet sind,
**dadurch gekennzeichnet, dass**
- der zentrale Kern (34) den Umfang des Vakuumisolationselements (32) umgibt.

2. Modul nach Anspruch 1, wobei die Abdeckung (40) eine erste Hauptfläche (34b) des zentralen Kerns vollständig abdeckt, die einer zweiten Hauptfläche (34a) des Kerns gegenüberliegt, die an der Trägerplatte (38) befestigt ist.

3. Modul nach Anspruch 2, wobei die Abdeckung (40) eine der Hauptflächen (32a, 32b) des Vakuumisolationselements (32) vollständig abdeckt, die vom zentralen Kern (34) freigelassen wurde.

4. Modul nach einem der vorhergehenden Ansprüche, wobei die Trägerplatte (38), die Abdeckung (40) und der Kern (34) identische Abmessungen und identische äußere Formen aufweisen.

5. Modul nach einem der vorhergehenden Ansprüche, wobei der zentrale Kern (34) aus wärmehärtbarem Schaumstoff oder thermoplastischem Schaumstoff hergestellt ist.

6. Modul nach einem der vorhergehenden Ansprüche, wobei der zentrale Kern (34) aus einem Stück hergestellt ist.

7. Modul nach einem der Ansprüche 1 bis 5, wobei der zentrale Kern (34) durch Zusammenfügen von mindestens zwei Längsträger (62) und mindestens zwei Querträgern (60), die die Längsträger quer verbinden, gebildet wird.

8. Modul nach einem der vorhergehenden Ansprüche, wobei das Vakuumisolationselement (32) auf der mittleren Längsebene (46) des Moduls zentriert ist.

9. Modul nach einem der vorhergehenden Ansprüche, wobei die Trägerplatte (38) und die Abdeckung (40) jeweils aus einem thermisch isolierenden Material hergestellt sind.

10. Modul nach einem der vorhergehenden Ansprüche, wobei der zentrale Kern (34) eine Vielzahl von Gehäusen (36) begrenzt, in deren Inneren jeweils mindestens ein Vakuumisolationselement (32) angeordnet ist.

11. Karosserieblech für ein Kühlfahrzeug, insbesondere für ein Straßenfahrzeug für den Gütertransport, umfassend eine Vielzahl von Karosseriemodulen (30) nach einem der vorhergehenden Ansprüche, die im Verhältnis zueinander in Längsrichtung ausgerichtet ist.

12. Kühlkarosserie für ein Fahrzeug, insbesondere für ein Straßenfahrzeug für den Gütertransport, umfassend einen inneren Laderaum, der durch Wände, die vertikale Seiten, einen Boden und eine Decke bilden, begrenzt ist, wobei mindestens eine der Wände ein Karosserieblech nach Anspruch 11 umfasst.

13. Verfahren zum Herstellen eines Karosseriemoduls nach einem der Ansprüche 1 bis 10, umfassend:
- einen ersten Schritt des Auftragens von Klebstoff auf eine der Hauptflächen der Trägerplatte (38),
- einen Schritt des Positionierens des zentralen Kerns (34) und des Vakuumisolationselements (32) auf der mit Klebstoff beschichteten Hauptfläche der Trägerplatte (38),
- einen zweiten Schritt des Auftragens von Klebstoff mindestens auf den zentralen Kern (34) auf der der Trägerplatte (38) gegenüberliegenden Seite,
- einen Schritt des Positionierens der Abdeckung (40) auf dem mit Klebstoff beschichteten zentralen Kern (34) und dem Vakuumisolationselement (32), und
- einen Schritt des Anpressens des Moduls mindestens während der Dauer der Polymerisation des aufgetragenen Klebers.

14. Verfahren nach Anspruch 13, wobei der Anpressschritt im Vakuum durchgeführt wird.

## Claims

1. A bodywork module (30) for a refrigerated vehicle, in particular for a road vehicle for transporting goods, comprising at least one vacuum insulation element (32) provided with a core (42) and an encapsulation membrane (44) of said core, the module further comprising:
- a central core (34) delimiting at least one housing (36) which passes through the thickness of the core and inside which said vacuum insulation element (32) is disposed, the central core (34) leaving free the main faces (32a, 32b) of said vacuum insulation element (32) which delimit its thickness,
- a support plate (38) on which the central core (34) and said vacuum insulation element (32) are fixed, and
- a cover (40) covering said vacuum insulation element (32) and at least partly the central core (34), the cover being fixed at least on the central core,
- the cover (40) and the support plate (38) being disposed on either side of the central core (34) and said vacuum insulation element (32),
**characterised in that**
- the central core (34) surrounds the periphery of said vacuum insulation element (32).

2. The module according to claim 1, wherein the cover (40) completely covers a first main face (34b) of the central core which is opposite a second main face (34a) of the core which is fixed to the support plate (38).

3. The module according to claim 2, wherein the cover (40) completely covers one of the main faces (32a, 32b) of said vacuum insulation element (32) left free by the central core (34).

4. The module according to any one of the preceding claims, wherein the support plate (38), the cover (40) and the core (34) are of identical external dimensions and shapes.

5. The module according to any one of the preceding claims, wherein the central core (34) is made of thermosetting foam or thermoplastic foam.

6. The module according to any one of the preceding claims, wherein the central core (34) is made in a single piece.

7. The module according to any one of claims 1 to 5, wherein the central core (34) is formed by assembling at least two spars (62) and at least two crosspieces (60) transversely connecting said spars.

8. The module according to any one of the preceding claims, wherein said vacuum insulation element (32) is centred on the median longitudinal plane (46) of said module.

9. The module according to any one of the preceding claims, wherein the support plate (38) and the cover (40) are each made of a thermally insulating material.

10. The module according to any one of the preceding claims, wherein the central core (34) delimits a plurality of housings (36) inside each of which is disposed at least one vacuum insulation element (32).

11. A bodywork panel for a refrigerated vehicle, in particular for a road vehicle for transporting goods, comprising a plurality of bodywork modules (30) according to any one of the preceding claims aligned longitudinally relative to each other.

12. A refrigerated bodywork for a vehicle, in particular for a road vehicle for transporting goods, comprising an interior loading space delimited by walls forming vertical flanks, a floor and a ceiling, wherein at least one of said walls comprises a bodywork panel according to claim 11.

13. A method for manufacturing a bodywork module according to any one of claims 1 to 10, comprising:
- a first step of applying glue to one of the main faces of the support plate (38),
- a step of positioning the central core (34) and said vacuum insulation element (32) against the main face of the support plate (38) coated with glue,
- a second step of applying glue at least to the central core (34) on the side opposite the support plate (38),
- a step of positioning the cover (40) against the central core (34) coated with glue and against said vacuum insulation element (32), and
- a step of pressing the module at least for the duration of polymerisation of the glue applied.

14. The method according to claim 13, wherein the pressing step is carried out under vacuum.
